# EUROPEAN PATENT APPLICATION

(11) **EP 3 182 021 A1**
(43) Date of publication of application: **21.06.2017**
(21) Application number: 15893803.5
(22) Date of filing: 24.06.2015
(51) Int. Cl.: F24F 1/06, F16K 11/065, F25B 41/04

(54) **AIR-CONDITIONING OUTDOOR UNIT AND AIR CONDITIONER**

(30) Priority: 01.06.2015 CN 201510292270; 01.06.2015 CN 201520367517 U
(71) Applicant: GD Midea Heating & Ventilating Equipment Co., Ltd., 528311 Foshan Guangdong (CN); Midea Group Co., Ltd., Foshan, Guangdong 528311 (CN)
(72) Inventor: SONG, Rui, Foshan Guangdong 528311 (CN)
(74) Representative: Romano, Giuseppe
(86) International application number: PCT/CN2015/082246
(87) International publication number: WO 2016/192147

(57) **Abstract**

An air-conditioning outdoor unit (1000) and an air conditioner are provided, the air-conditioning outdoor unit (1000) including: a compressor (400) having an air exhaust port (401) and an air return port (402); a six-way directional valve (100) including a valve body (1), a valve spool (2) and a pilot valve assembly (5), the valve body (1) defining a valve cavity (4) therein and being provided with a first connecting pipe (11), a second connecting pipe (12), a third connecting pipe (13), a fourth connecting pipe (14), a fifth connecting pipe (15) and a sixth connecting pipe (16), the valve spool (2) being movably disposed in the valve cavity (4), two valve chambers (3) being defined between two moving ends of the valve spool (2) and an inner circumferential wall of the valve cavity (4) so that the valve spool (2) is moved by a pressure difference between the two valve chambers (3); and an outdoor heat exchanger (500).

## Description

### FIELD

The present disclosure relates to a technical field of refrigeration equipment, and more particularly to an air-conditioning outdoor unit and an air conditioner.

### BACKGROUND

In the related art, two four-way directional valves are usually connected in series in an air conditioner to achieve directional circulation of a refrigerant in the air conditioner. However, not only a cost of the air-conditioning outdoor unit is increased due to the two four-way directional valves connected in series, the connection between the two four-way directional valves and ducts in the air conditioner is also relatively complicated.

### SUMMARY

The present disclosure seeks to solve one of the technical problems in the related art to at least some extent. For that reason, the present disclosure provides an air-conditioning outdoor unit, including a six-way directional valve, which may to some extent reduce the cost of the air-conditioning outdoor unit and simplify a connection of ducts in the air-conditioning outdoor unit.

An air conditioner is further provided in the present disclosure, including the above-mentioned air-conditioning outdoor unit.

The air-conditioning outdoor unit according to the present disclosure has an outdoor unit output port and an outdoor unit input port, the air-conditioning outdoor unit including: a compressor having an air exhaust port and an air return port; a six-way directional valve including a valve body, a valve spool and a pilot valve assembly, the valve body defining a valve cavity therein and being provided with a first connecting pipe, a second connecting pipe, a third connecting pipe, a fourth connecting pipe, a fifth connecting pipe and a sixth connecting pipe, the valve spool being movably disposed in the valve cavity, two valve chambers being defined between two moving ends of the valve spool and an inner circumferential wall of the valve cavity so that the valve spool is moved by a pressure difference between the two valve chambers, a first chamber and a second chamber being defined between the valve spool and a same side wall of the valve cavity, a third chamber being defined between the valve spool and the inner circumferential wall of the valve cavity, the first connecting pipe being normally communicated with the third chamber, the third connecting pipe being normally communicated with the first chamber, the fifth connecting pipe being normally communicated with the second chamber, the valve spool moving so that one of the second connecting pipe and the sixth connecting pipe is communicated with the third chamber, the first chamber is communicated with the second connecting pipe or the fourth connecting pipe and the second chamber is communicated with the fourth connecting pipe or the sixth connecting pipe, the pilot valve assembly being respectively communicated with the two valve chambers so as to change the pressure in the two valve chambers, in which the first connecting pipe is connected with the air exhaust port, the second connecting pipe is connected with the outdoor unit output port, the fourth connecting pipe is connected with the air return port, the fifth connecting pipe is connected with the outdoor unit input port; and an outdoor heat exchanger having two ends respectively connected with the third connecting pipe and the sixth connecting pipe.

With the air-conditioning outdoor unit according to the present disclosure, by connecting the six-way directional valve in series in the refrigerant circulation path of the air-conditioning outdoor unit to replace the two four-way directional valves connected in series in the ducts in the existing art, so as to reduce the parts connected in series in the ducts of the air-conditioning outdoor unit, not only the cost of the air-conditioning outdoor unit may be reduced to some extent, the connection of the ducts in the air-conditioning outdoor unit is also simplified, a structure of the air-conditioning outdoor unit is optimized, and a connection reliability of the air-conditioning outdoor unit is improved.

According to some embodiments of the present disclosure, the valve spool includes: two barrier blocks spaced from each other, the two valve chambers being defined between the two barrier blocks and the inner circumferential wall of the valve cavity respectively; and a sliding block disposed between the two barrier blocks and connected with the two barrier blocks through a connecting rod respectively, the first chamber and the second chamber being defined between the sliding block and the same side wall of the valve cavity, the third chamber being defined between the sliding block, the two connecting rods, the two barrier blocks and the inner circumferential wall of the valve cavity.

Further, the two barrier blocks, the sliding block and the two connecting rods are an integrally formed member.

Optionally, the first connecting pipe is disposed in a first side wall of the valve body, the second connecting pipe, the third connecting pipe, the fourth connecting pipe, the fifth connecting pipe and the sixth connecting pipe are respectively disposed in a second side wall of the valve body opposite to the first side wall and are arranged successively.

According to some embodiments of the present disclosure, a cross section of the valve body is formed to be a round shape.

The air conditioner according to the present disclosure includes the above-mentioned air-conditioning outdoor unit.

The air conditioner according to the present disclosure, by disposing the above-mentioned air-conditioning outdoor unit, not only the cost of the air conditioner is reduced to some extent, the connection of the ducts in the air-conditioning outdoor unit is also simplified, which optimizes the structure of the air-conditioning outdoor unit, and improves the connection reliability of the air-conditioning outdoor unit.

### BRIEF DESCRIPTION OF THE DRAWINGS

Fig. 1 is a front view of a six-way directional valve according to embodiments of the present disclosure;
Fig. 2 is a left view of a six-way directional valve according to embodiments of the present disclosure;
Fig. 3 is a cross sectional view of the six-way directional valve along the A-A direction shown in Fig. 2;
Fig. 4 is a schematic view of an air-conditioning outdoor unit according to embodiments of the present disclosure when it heats;
Fig. 5 is a schematic view of an air-conditioning outdoor unit according to embodiments of the present disclosure when it refrigerates;
Fig. 6 is a schematic view of the air-conditioning outdoor unit when it heats shown in Fig. 4;
Fig. 7 is a schematic view of the air-conditioning outdoor unit when it refrigerates shown in Fig. 5.

### Reference numerals:

Air-conditioning outdoor unit 1000;
Six-way directional valve 100; valve body 1; first connecting pipe 11; second connecting pipe 12; third connecting pipe 13; fourth connecting pipe 14; fifth connecting pipe 15; sixth connecting pipe 16; valve spool 2; first chamber 21; second chamber 22; third chamber 23; barrier block 24; sliding block 25; connecting rod 26; valve chamber 3; valve cavity 4; pilot valve assembly 5;
Outdoor unit output port 200;
Outdoor unit input port 300;
Compressor 400; air exhaust port 401; air return port 402;
Outdoor heat exchanger 500;
L left; R right.

### DETAILED DESCRIPTION

Embodiments of the present disclosure will be described in detail in the following, and examples of the embodiments are shown in the accompanying drawings. The embodiments described herein with reference to drawings are illustrative, and used to generally understand the present disclosure and shall not be construed to limit the present disclosure.

In the specification, unless specified or limited otherwise, relative terms such as "left", "right", "inner", "outer", should be construed to refer to the orientation as then described or as shown in the drawings under discussion. These relative terms are for convenience of description and do not require that the present disclosure be constructed or operated in a particular orientation, so shall not be construed to limit the present disclosure.

In the present disclosure, unless specified or limited otherwise, the terms "connected," "coupled," "fixed" and variations thereof should be understand broadly, such as may be fixed connections, detachable connections or integral connections; may also be mechanical connections, electrical connections or be communicated with each other, and further can be direct connections or indirections via intervening mediums, may also be inner communications or function relationships of two elements, which can be understood by those skilled in the art according to the specific conditions.

In the present invention, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

An air-conditioning outdoor unit 1000 according to embodiments of the present disclosure will be described in the following with reference to drawings, and the air-conditioning outdoor unit 1000 has an outdoor unit output port 200 and an outdoor unit input port 300. An air-conditioning indoor unit is connected between the outdoor unit output port 200 and the outdoor unit input port 300, the air-conditioning indoor unit includes an indoor heat exchanger, a throttling element and the like, and the air-conditioning outdoor unit 1000 and an air-conditioning indoor unit form an air conditioner together to adjust indoor temperature.

The air-conditioning outdoor unit 1000 according to embodiments of the present disclosure includes a compressor 400, a six-way directional valve 100 and an outdoor heat exchanger 500. In which, the compressor 400 has an air exhaust port 401 and an air return port 402, a refrigerant enters into the compressor 400 from the air return 402, forms to be a refrigerant in high temperature and high pressure after being compressed by the compressor 400, and the refrigerant in high temperature and high pressure is exhausted from the air exhaust port 401. It should be noted that, structures and operation principles of the compressor 400 are the existing technologies, which will not be described in detail herein.

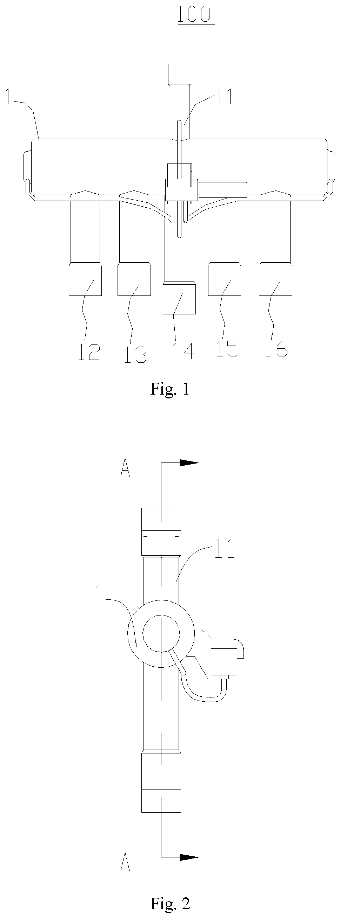

As shown in Figs. 1-5, the six-way directional valve 100 includes a valve body 1, a valve spool 2 and a pilot valve assembly 5. In which, the valve body 1 defines a valve cavity 4 therein and is provided with a first connecting pipe 11, a second connecting pipe 12, a third connecting pipe 13, a fourth connecting pipe 14, a fifth connecting pipe 15 and a sixth connecting pipe 16, the first connecting pipe to the sixth connecting pipe 11-16 are respectively communicated with other ducts in the air-conditioning outdoor unit 1000, so as to facilitate the circulation of the refrigerant.

The valve spool 2 is movably disposed in the valve cavity 4, that is, the valve spool 2 is movable in the valve cavity 4, thus, a directional function of the six-way directional valve 100 may be achieved by a movement of the valve spool 2 in the valve cavity 4, thus achieving the directional circulation of the refrigerant in the air conditioner.

Two valve chambers 3 are defined between two moving ends of the valve spool 2 and an inner circumferential wall of the valve cavity 4, so that the valve spool 2 is moved by a pressure difference between the two valve chambers 3, that is, the movement action of the valve spool 2 in the valve cavity 4 is driven by the pressure difference of the two valve chambers 3. Specifically, when a pressure in one of the two valve chambers 3 is relatively higher, the valve spool 2 is moved towards the other valve chamber 3 which has a relatively lower pressure therein, eventually a pressure balance is reached, thus achieving the movement of the valve spool 2 by this method, further achieving the directional control function of the six-way directional valve 100.

Specifically, the pilot valve assembly 5 is connected with the two valve chambers 3 respectively so as to change the pressure in the two valve chamber 3, for example, when the air conditioner needs to be switched between a refrigeration mode and a heating mode, with the pilot valve assembly 5 changing the pressure in the two valve chambers 3, the valve spool 2 is allowed to move towards the valve chamber 3 at the side of a lower pressure, thus achieving a directional control of the six-way directional valve 100, and changing the circulation direction of the refrigerant, thereby achieving the refrigeration function or the heating function of the air conditioner.

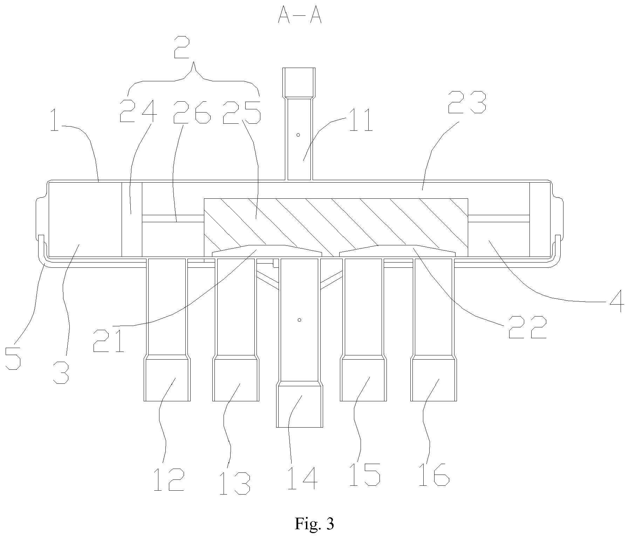

As shown in Fig. 3- Fig. 5, a first chamber 21 and a second chamber 22 are defined between the valve spool 2 and a same side wall of the valve cavity 4, a third chamber 23 is defined between the valve spool 2 and the inner circumferential wall of the valve cavity 4, the first connecting pipe 11 is normally communicated with the third chamber 23, the third connecting pipe 13 is normally communicated with the first chamber 21, the fifth connecting pipe 15 is normally communicated with the second chamber 22, that is, no matter the six-way directional valve 100 is controlled in direction or not, the first connecting pipe 11 is always communicated with the third chamber 23, the third connecting pipe 13 is always communicated with the first chamber 21, the fifth connecting pipe 15 is always communicated with the second chamber 22.

The valve spool 2 moves so that one of the second connecting pipe 12 and the sixth connecting pipe 16 is communicated with the third chamber 23, the first chamber 21 is communicated with the second connecting pipe 12 or the fourth connecting pipe 14 and the second chamber 22 is communicated with the fourth connecting pipe 14 or the sixth connecting pipe 16, that is, when the second connecting pipe 12 is communicated with the third chamber 23, the first chamber 21 is communicated with the fourth connecting pipe 14, the second chamber 22 is communicated with the sixth connecting pipe 16. When the sixth connecting pipe 16 is communicated with the third chamber 23, the second connecting pipe 12 is communicated with the first chamber 21, and the fourth connecting pipe 14 is communicated with the second chamber 22.

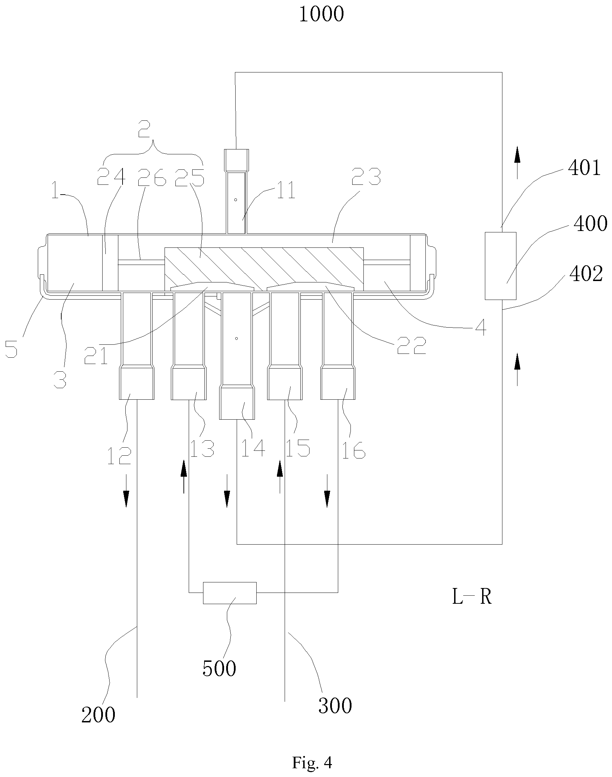

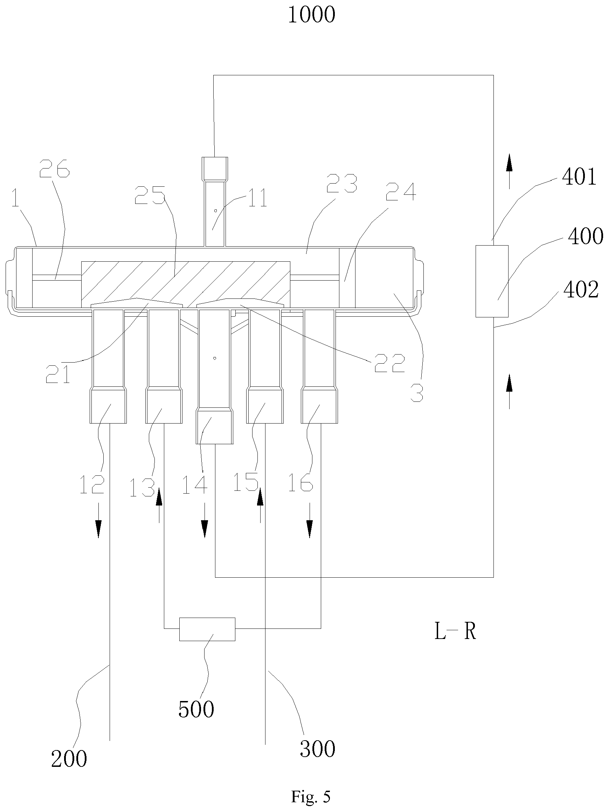

Specifically, with the pilot valve assembly 5 changing the pressure in the two valve chambers 3, the valve spool 2 is allowed to move towards the valve chamber 3 at the side of a lower pressure. For example, when the valve spool 2 moves to the right, as shown in Figs. 3 and 4, at this moment, the first connecting pipe 11 and the second connecting pipe 12 are communicated with the third chamber 23, the third connecting pipe 13 and the fourth connecting pipe 14 are communicated with the first chamber 21, and the fifth connecting pipe 15 and the sixth connecting pipe 16 are communicated with the second chamber 22. When the valve spool 2 moves to the left, as shown in Fig. 5, the first connecting pipe 11 and the sixth connecting pipe 16 are communicated with the third chamber 23, the second connecting pipe 12 and the third connecting pipe 13 are communicated with the first chamber 21, the fourth connecting pipe 14 and the fifth connecting pipe 15 are communicated with the second chamber 22. It could be understood that, the movements towards left and right of the valve spool 2 are just explanatory descriptions according to Fig. 3- Fig. 5, and shall not be construed as a limit to the valve spool 2. In order to facilitate the description, the movements of the valve spool 2 mentioned below are all illustrated with movements towards left or right.

The first connecting pipe 11 is connected with the air exhaust port 401, the second connecting pipe 12 is connected with the outdoor unit output port 200, the fourth connecting pipe 14 is connected with the air return port 402, the fifth connecting pipe 15 is connected with the outdoor unit input port 300, thus making the six-way directional valve 100 communicated in the refrigerant circulation path of the air-conditioning outdoor unit 1000, so as to facilitate the switch of the flowing direction of the refrigerant.

Two ends of the outdoor heat exchanger 500 are connected with the third connecting pipe 13 and the sixth connecting pipe 16 respectively, thus facilitating the refrigerant to flow through the outdoor heat exchanger 500 to exchange heat with the outdoor environment.

The air-conditioning outdoor unit 1000 is applied in the air conditioner in the following, so as to describe the flowing direction of the refrigerant in the air conditioner in detail.

As shown in Figs. 3-4 and Fig. 6, when the air conditioner is at the heating mode, the pilot valve assembly 5 changes the pressure in the two valve chambers 3, so that the valve spool 2 moves to the right, at the moment the first connecting pipe 11 and the second connecting pipe 12 are communicated with the third chamber 23, the third connecting pipe 13 and the fourth connecting pipe 14 are communicated with the first chamber 21, the fifth connecting pipe 15 and the sixth connecting pipe 16 are communicated with the second chamber 22, the refrigerant in a high pressure and high temperature exhausted from the air exhaust port 401 of the compressor 400 enters into the third chamber 23 through the first connecting pipe 11, then flows out from the second connecting pipe 12, enters into the air-conditioning indoor unit through the outdoor unit output port 200, and exchanges heat with the indoor environment in the air-conditioning indoor unit for improving the indoor temperature, then the refrigerant exhausted from the air-conditioning indoor unit enters into the second chamber 22 through the outdoor unit input port 300 and the fifth connecting pipe 15, subsequently enters into the outdoor heat exchanger 500 through the sixth connecting pipe 16, and exchanges heat with the outdoor environment in the outdoor heat exchanger 500, then the refrigerant enters into the first chamber 21 through the third connecting pipe 13 after flowing out from the outdoor heat exchanger 500, then returns to the compressor 400 through the fourth connecting pipe 14 and the air return port 402 of the compressor 400, which are reciprocating to form the heating circulation.

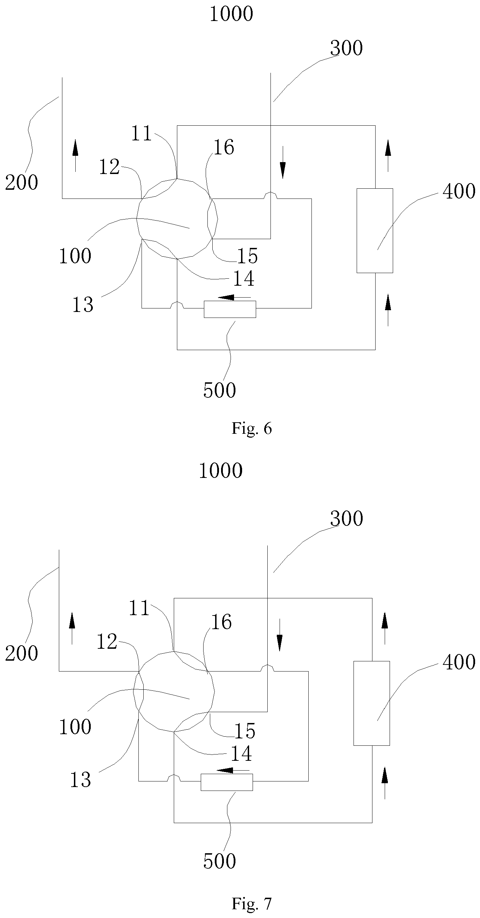

As shown in Fig. 5 and Fig. 7, when the air conditioner is at the refrigeration mode, the pilot valve assembly 5 changes the pressure in the two valve chambers 3, so that the valve spool 2 moves to the left, at the moment the first connecting pipe 11 and the sixth connecting pipe 16 are communicated with the third chamber 23, the second connecting pipe 12 and the third connecting pipe 13 are communicated with the first chamber 21, the fourth connecting pipe 14 and the fifth connecting pipe 15 are communicated with the second chamber 22, the refrigerant in a high pressure and high temperature exhausted from the air exhaust port 401 of the compressor 400 enters into the third chamber 23 through the first connecting pipe 11, then flows out from the sixth connecting pipe 16, enters into the outdoor heat exchanger 500, and exchanges heat with the outdoor environment in the outdoor heat exchanger 500, then after flowing out from the outdoor heat exchanger 500, the refrigerant enters into the first chamber 21 through the third connecting pipe 13, subsequently flows out from the second connecting pipe 12, enters into the air-conditioning indoor unit through the outdoor unit output port 200, enters into the second chamber 22 through the outdoor unit input port 300 and the fifth connecting pipe 15 after flowing out from the air-conditioning indoor unit and then flows out from the fourth connecting pipe 14, and returns to the compressor 400 through the air return port 402 of the compressor 400, which are reciprocating to form the refrigeration circulation.

With the air-conditioning outdoor unit 1000 according to embodiments of the present disclosure, by connecting the six-way directional valve 100 in series in the refrigerant circulation path of the air-conditioning outdoor unit 1000 to replace the two four-way directional valves connected in series in the ducts in the existing art, so as to reduce the parts connected in series in the ducts of the air-conditioning outdoor unit 1000, not only the cost of the air-conditioning outdoor unit 1000 may be reduced to some extent, the connection of the ducts in the air-conditioning outdoor unit 1000 is also simplified, a structure of the air-conditioning outdoor unit 1000 is optimized, and a connection reliability of the air-conditioning outdoor unit 1000 is improved.

According to some embodiments of the present disclosure, the valve spool 2 includes two barrier blocks 24 spaced from each other and a sliding block 25. In which, two valve chambers 3 are defined between the two barrier blocks 24 and the inner circumferential wall of the valve cavity 4 respectively, thereby facilitating the valve spool 2 to move in the valve cavity 4 to achieve the directional control of the six-way directional valve 100, thus changing the flowing direction of the refrigerant in the air conditioner.

The sliding block 25 is disposed between the two barrier blocks 24, the sliding block 25 is connected with the two barrier blocks 24 through a connecting rod 26 respectively, the first chamber 21 and the second chamber 22 are defined between the sliding block 25 and the same side wall of the valve cavity 4, and the third chamber 23 is defined between the sliding block 25, the two connecting rods 26, the two barrier blocks 24 and the inner circumferential wall of the valve cavity 4. Specifically, after the pilot valve assembly 5 changes the pressure in the two valve chambers 3, the pressure in the valve chamber 3 at the side of a higher pressure drives the barrier block 24 and the barrier block 24 drives the sliding block 25 to move towards the valve chamber 3 at the side of a lower pressure, so as to allow the first chamber 21, the second chamber 22 and the third chamber 23 to be connected with the corresponding first connecting pipe to the sixth connecting pipe 11-16, thereby achieving the directional control of the six-way directional valve 100, thus adjusting the flowing direction of the refrigerant in the refrigerant circulation path.

Optionally, the two barrier blocks 24, the sliding block 25 and the two connecting rods 26 may be an integrally formed member, thus not only facilitating the production, processing and manufacture of the barrier block 24, the sliding block 25 and the two connecting rods 26, but also saving the production cost of the valve spool 2, in the meanwhile the connection strength among the barrier block 24, the sliding block 25 and the two connecting rods 26 may be improved to some extent, prolonging the service life of the valve 2.

According to some embodiments of the present disclosure, as shown in Fig. 1 to Fig. 5, the first connecting pipe 11 is disposed in a first side wall of the valve body 1, the second connecting pipe to the sixth connecting pipe 12-16 are respectively disposed in a second side wall of the valve body 1 opposite to the first side wall and are arranged successively, that is, the first connecting pipe 11 are disposed oppositely to the second connecting pipe to the sixth connecting pipe 12-16, thereby facilitating the first connecting pipe to the sixth connecting pipe 11-16 to be respectively connected with the corresponding first chamber to the third chamber 21-23, so as to achieve the directional control of the six-way directional valve 100.

Optionally, a cross section of the valve body 1 may be formed to be a round shape, as shown in Fig. 2, thereby facilitating the communication of the six-way directional valve 100 with other ducts in the air-conditioning outdoor unit 1000.

The air conditioner according to embodiments of the present disclosure includes the above-mentioned air-conditioning outdoor unit 1000.

The air conditioner according to embodiments of the present disclosure, by disposing the above-mentioned air-conditioning outdoor unit 1000, may not only reduce the cost of the air conditioner to some extent, but also simplify the connection of the ducts in the air-conditioning outdoor unit 1000, optimizing the structure of the air-conditioning outdoor unit 1000, improving the connection reliability of the air-conditioning outdoor unit 1000.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Furthermore, the particular features, structures, materials, or characteristics may be combined in suitable manner in one or more embodiments or examples. In addition, different embodiments or examples or different features in the embodiments or examples described in the present specification can be united or combined by those skilled in the art.

Although embodiments of the present disclosure have been shown and described, it could be understood that the embodiments above are explanatory and cannot be construed to limit the present disclosure, and changes, modifications, alternatives, and variation can be made to the embodiments by those skilled in the art without departing from the scope of the present disclosure.

## Claims

1. An air-conditioning outdoor unit, wherein the air-conditioning outdoor unit has an outdoor unit output port and an outdoor unit input port, the air-conditioning outdoor unit comprising:
a compressor having an air exhaust port and an air return port;
a six-way directional valve comprising a valve body, a valve spool and a pilot valve assembly, the valve body defining a valve cavity therein and being provided with a first connecting pipe, a second connecting pipe, a third connecting pipe, a fourth connecting pipe, a fifth connecting pipe and a sixth connecting pipe, the valve spool being movably disposed in the valve cavity, two valve chambers being defined between two moving ends of the valve spool and an inner circumferential wall of the valve cavity so that the valve spool is moved by a pressure difference between the two valve chambers, a first chamber and a second chamber being defined between the valve spool and a same side wall of the valve cavity, a third chamber being defined between the valve spool and the inner circumferential wall of the valve cavity, the first connecting pipe being normally communicated with the third chamber, the third connecting pipe being normally communicated with the first chamber, the fifth connecting pipe being normally communicated with the second chamber, the valve spool moving so that one of the second connecting pipe and the sixth connecting pipe is communicated with the third chamber, the first chamber is communicated with the second connecting pipe or the fourth connecting pipe and the second chamber is communicated with the fourth connecting pipe or the sixth connecting pipe, the pilot valve assembly being communicated with the two valve chambers so as to change the pressure in the two valve chambers, wherein the first connecting pipe is connected with the air exhaust port, the second connecting pipe is connected with the outdoor unit output port, the fourth connecting pipe is connected with the air return port, the fifth connecting pipe is connected with the outdoor unit input port; and
an outdoor heat exchanger having two ends respectively connected with the third connecting pipe and the sixth connecting pipe.

2. The air-conditioning outdoor unit according to claim 1, wherein the valve spool comprises:
two barrier blocks spaced from each other, the two valve chambers being defined between the two barrier blocks and the inner circumferential wall of the valve cavity respectively; and
a sliding block disposed between the two barrier blocks and connected with the two barrier blocks through a connecting rod respectively, the first chamber and the second chamber being defined between the sliding block and the same side wall of the valve cavity, the third chamber being defined between the sliding block, the two connecting rods, the two barrier blocks and the inner circumferential wall of the valve cavity.

3. The air-conditioning outdoor unit according to claim 2, wherein the two barrier blocks, the sliding block and the two connecting rods are an integrally formed member.

4. The air-conditioning outdoor unit according to any one of claims 1-3, wherein the first connecting pipe is disposed in a first side wall of the valve body, and the second connecting pipe, the third connecting pipe, the fourth connecting pipe, the fifth connecting pipe and the sixth connecting pipe are disposed in a second side wall of the valve body opposite to the first side wall and are arranged successively.

5. The air-conditioning outdoor unit according to any one of claims 1-4, wherein a cross section of the valve body is formed to be a round shape.

6. An air conditioner comprising an air-conditioning outdoor unit according to any one of claims 1-5.
